# EUROPÄISCHE PATENTSCHRIFT

(11) **EP 3 956 569 B1**
(45) Veröffentlichungstag und Bekanntmachung des Hinweises auf die Patenterteilung: **29.01.2025**
(21) Anmeldenummer: 19722524.6
(22) Anmeldetag: 17.04.2019
(51) Int. Cl.: F15B 7/00, F15B 7/08

(54) **HYDRAULISCHE ÜBERSETZUNGSEINHEIT FÜR EINE AKTOREINRICHTUNG**
HYDRAULIC TRANSMISSION UNIT FOR AN ACTUATOR
UNITÉ DE TRANSMISSION HYDRAULIQUE POUR UN DISPOSITIF ACTIONNEUR

(43) Veröffentlichungstag der Anmeldung: 23.02.2022
(73) Patentinhaber: MetisMotion GmbH, 81549 München (DE)
(72) Erfinder: BACHMAIER, Georg, 80469 München (DE); GERLICH, Matthias, 80636 München (DE); NEMOTO, Takeru, 80809 München (DE); ZÖLS, Wolfgang, 81249 München (DE)
(74) Vertreter: Hofstetter, Schurack & Partner
(86) Internationale Anmeldenummer: PCT/EP2019/059923
(87) Internationale Veröffentlichungsnummer: WO 2020/211936

(56) Entgegenhaltungen:
- WO-A1-2011/150913
- WO-A1-2012/034823
- FR-A- 1 370 931
- FR-A- 825 344
- US-A- 5 287 700

## Beschreibung

Die vorliegende Erfindung betrifft eine hydraulische Übersetzungseinheit für eine Aktoreinrichtung, welche mit einer Hydraulikflüssigkeit befüllbar ist und eine erste und eine zweite Kammer aufweist, welche hydraulisch miteinander verbunden sind und von denen eine als Antriebskammer und die andere als Abtriebskammer ausgebildet ist. Weiterhin betrifft die Erfindung eine Aktoreinrichtung mit einer solchen hydraulischen Übersetzungseinheit.

Aus dem Stand der Technik sind vor allem piezohydraulische Aktoren bekannt, die typischerweise einen Piezoaktor und eine hydraulische Übersetzungseinheit umfassen, wobei der Piezoaktor als Antrieb für die hydraulische Übersetzungseinheit wirkt. Ein wesentliches Merkmal solcher kombinierter Aktoreinrichtungen ist, dass durch das Vorliegen einer Hydraulikeinheit ein wesentlich größerer mechanischer Hub erreicht werden kann als mit dem Piezoaktor allein. Dies kann beispielsweise durch ein Übersetzungsverhältnis in der Hydraulikeinheit erreicht werden und/oder durch einen Pumpeffekt in der Hydraulikeinheit, welcher eine Summierung des Effekts von zahlreichen kleinen Einzelbewegungen des Piezoaktors bewirkt. Hierdurch wird ein Hauptnachteil des Piezoaktors und auch an derer bekannter Festkörperaktoren überwunden, nämlich deren geringer Hub. Solche piezohydraulischen Aktoren sind beispielsweise aus den Offenlegungsschriften DE 102016213654 A1 und DE 102013219759 A1 bekannt.

Die bekannten hydraulischen Übersetzungseinheiten sind typischerweise entweder als Kolbensysteme oder als Balgsysteme realisiert. Unabhängig von der genauen Ausführung weisen sie in jedem Fall eine Antriebskammer und eine Abtriebskammer auf, welche miteinander hydraulisch verbunden sind. Bei einem Kolbensystem weist dann die Antriebskammer einen in ihr beweglichen Antriebskolben auf, und die Abtriebskammer weist einen in ihr beweglichen Abtriebskolben auf. Die beiden Kammern sind fluidisch gekoppelt, sodass eine Bewegung des Antriebskolbens eine Bewegung des Abtriebskolbens bewirken kann. Dabei kann in Abhängigkeit des Flächenverhältnisses der beiden Kolben ein gewünschtes Übersetzungsverhältnis für die beiden Bewegungen erreicht werden. So kann insbesondere ein relativ geringer Hub eines Piezoaktors durch die mechanisch in Serie geschaltete hydraulische Übersetzungseinheit auf einen für eine bestimmte Anwendung benötigten Wert vergrößert werden .

Problematisch bei einem solchen Kolbensystem ist, dass die Abdichtung des Arbeitsvolumens gegen die äußere Umgebung im Bereich des beweglichen Kolbens relativ schwierig ist. Damit der Kolben innerhalb der betreffenden Kammer beweglich ist, muss ein gewisser Spalt zwischen dem Kolben und der umgeben den Zylinderwand vorliegen. Durch diesen Spalt kann Hydraulikflüssigkeit austreten. Dies kann einerseits dazu führen, dass sich bei einem längeren Betrieb der Übersetzungseinrichtung die hydraulischen Parameter auf unerwünschte Weise verändern. Andererseits kann dies auch zu einer unerwünschten Kontamination der Umgebung mit der Hydraulikflüssigkeit führen .

Alternativ kann die hydraulische Übersetzungseinheit als Balgsystem realisiert sein. Hier werden die beiden Kammern nicht durch bewegliche Kolben, sondern durch balgartig geformte Außenwände begrenzt. Beispielsweise können die Seiten wände der Kammern durch sogenannte Faltenbälge gebildet sein, wodurch sich jeweils ein variables Volumen in den Kammern ergibt. Durch die fluidische Kopplung der beiden Kammern bewirkt auch hier eine Kompression in der einen Kammer eine Expansion in der anderen Kammer, und umgekehrt. Auch hier kann durch die Wahl eines bestimmten Verhältnisses zwischen den Querschnittsflächen der beiden Faltenbälge ein gewünschtes Weg-Übersetzungsverhältnis eingestellt werden. Ein Vorteil eines solchen Balgsystems gegenüber dem beschriebenen Kolbensystem besteht darin, dass die Faltenbälge fluid dicht ausgeführt werden können und somit ein Austritt von Hydraulikflüssigkeit aus dem System vermieden werden kann.

Ein solches Balgsystem weist allerdings auch mehrere Nachteile auf: Der Bereich zwischen den Balg-Wellen besitzt oft einen vergleichsweise hohen Anteil am Flüssigkeitsvolumen der Kammer, was die fluidische Steifigkeit und somit die Dynamik der Übersetzungseinheit reduziert. Außerdem weist eine als Faltenbalg ausgebildete Wand auch immer eine begrenzte Steifigkeit in seitlicher Richtung auf (also senkrecht zur Hauptbewegungsrichtung bei der Verformung des Balgs) . Auch dies führt zu einer geringeren Dynamik der Übersetzung. Ein weiterer Nachteil ist, dass bei der Möglichkeit von hohen Druck spitzen in der betreffenden Kammer der Balg mit einer ausreichend hohen Wandstärke und einer entsprechend hohen mechanischen Steifigkeit ausgelegt werden muss. Dies führt zu vergleichsweise hohen mechanischen Verlusten in der Übersetzungseinheit.

Außerdem offenbart die FR 825 344 A ein Gerät zur Übermittlung von Fernaufträgen. Ferner ist aus der FR 1 370 931 A eine hydraulische Steuerung bekannt. Des Weiteren offenbart die US 5 287 700 A ein Aktorsystem.

Aufgabe der Erfindung ist es daher, eine hydraulische Übersetzungseinheit anzugeben, welche die genannten Nachteile überwindet. Insbesondere soll eine Übersetzungseinheit zur Verfügung gestellt werden, welche beim Betrieb eine hohe Dichtigkeit für die Hydraulikflüssigkeit aufweist und welche gleichzeitig eine besonders hohe Dynamik und geringe Energieverluste aufweist. Eine weitere Aufgabe ist es, eine Aktoreinrichtung mit einer solchen hydraulischen Übersetzungseinheit anzugeben.

Diese Aufgaben werden durch die in Anspruch 1 beschriebene hydraulische Übersetzungseinheit und die in Anspruch 13 beschriebene Aktoreinrichtung gelöst. Die erfindungsgemäße hydraulische Übersetzungseinheit ist als Übersetzungseinheit für eine Aktoreinrichtung ausgelegt. Sie ist mit einer Hydraulikflüssigkeit befüllbar und sie weist eine erste und eine zweite Kammer auf, welche hydraulisch miteinander verbunden sind. Von den beiden Kammern ist eine als Antriebskammer und die andere als Abtriebskammer ausgebildet. Zumindest in der ersten Kammer ist ein erster

Kolben entlang einer Kolbenachse beweglich angeordnet, sodass dieser erste Kolben die erste Kammer in eine volumenmäßig variable, erste Arbeitskammer und eine erste Rückseitenkammer trennt. Die erste Rückseitenkammer ist zumindest teilweise durch ein erstes Balgelement mit variabler axialer Länge begrenzt.

Bei der beschriebenen ersten Kammer mit den genannten weiteren Eigenschaften kann es sich entweder um die Antriebskammer oder um die Abtriebskammer der Übersetzungseinheit handeln. Beide Kammern sind mit den beschriebenen Merkmalen ausgestaltet. Die im Folgenden beschriebenen Vorteile und auch die beschriebenen vorteilhaften Ausführungsvarianten gelten entsprechend für beide Kammern.

Für die jeweilige Kammer ist durch die Bewegungsrichtung des Kolbens eine lokale axialer Richtung definiert. Im Folgenden bezieht sich der Begriff "axial" immer auf die lokale Richtung der Kolbenachse in der jeweiligen Kammer. Dabei können die axialen Richtungen der einzelnen Kammern entweder gleich oder gegebenenfalls auch unterschiedlich gewählt sein. Im Folgenden bezieht sich der Begriff "seitlich" immer auf eine Richtung senkrecht zu der jeweiligen axialen Richtung.

Bei der erfindungsgemäßen Ausgestaltung der ersten Kammer ist diese durch den Kolben in eine Arbeitskammer und eine Rückseitenkammer getrennt. Dabei kann die Position und somit das Verhältnis der Aufteilung durch die Bewegung des Kolbens variiert werden. Die Seite des Kolbens, die der Arbeitskammer zugewandt ist, wird im Folgenden als Vorderseite des Kolbens bezeichnet. Entsprechend liegt die Rückseitenkammer im Bereich der Rückseite des Kolbens. Die Arbeitskammer der ersten Kammer ist insbesondere mit einer entsprechenden Arbeitskammer der zweiten Kammer fluidisch gekoppelt, sodass sich Volumenänderungen in den beiden Arbeitskammer durch einen entsprechenden Fluss von Hydraulikflüssigkeit gegenseitig ausgleichen können. Auf diese Weise kann eine Bewegung eines im Bereich der Antriebskammer angeordneten Antriebskörpers in eine entsprechende Bewegung eines im Bereich der Abtriebskammer angeordneten Abtriebskörpers übersetzt werden.

Die Rückseitenkammer ist zumindest teilweise durch ein Balgelement begrenzt: Mit anderen Worten ist zumindest ein Teil der Wand der Rückseitenkammer als balgartig verformbare Wand gebildet. Dieses Balgelement soll eine variable axiale Länge aufweisen: Mit anderen Worten soll das Balgelement so ausgestaltet sein, dass die Länge der Rückseitenkammer in axialer Richtung angepasst werden kann. Hierdurch kann vorteilhaft ein Längenausgleich erreicht werden, der insbesondere eine durch die Bewegung des Kolbens bewirkte Änderung der axialen Länge der Rückseitenkammer ausgleichen kann. Die durch die Bewegung des Kolbens bewirkte Längenänderung kann somit entweder teilweise oder sogar vollständig kompensiert werden. Durch diesen Längenausgleich kann insbesondere auch ein Volumenausgleich für das Volumen der Rückseitenkammer bewirkt werden.

Zweckmäßig kann durch die beschriebene Wirkung des Balgelements das Volumen der Rückseitenkammer bei einer Bewegung des Kolbens im Wesentlichen konstant gehalten werden.

Wie weiter unten noch ausführlicher dargelegt ist, muss das Volumen allerdings nicht vollkommen konstant sein. Wesentlich im Zusammenhang mit der vorliegenden Erfindung ist nur, dass bei einer Bewegung des Kolbens das Balgelement eine Längenänderung erfährt und dass diese Längenänderung geeignet ist, einer durch die Kolbenbewegung verursachten Volumenänderung der Rückseitenkammer entgegenzuwirken. Die durch die Kolbenbewegung verursachte Volumenänderung der Rückseitenkammer kann dabei grundsätzlich entweder teilweise oder vollständig kompensiert werden oder sogar überkompensiert werden.

Ein wesentlicher Vorteil der erfindungsgemäßen Übersetzungseinheit im Vergleich zu herkömmlichen reinen Kolbensystemen liegt darin, dass durch die gekapselte Ausgestaltung der Rückseitenkammer im Bereich der Rückseite des Kolbens insgesamt eine im wesentlichen vollständige Dichtigkeit für die Hydraulikflüssigkeit erreicht wird. Auch wenn bei der Bewegung des Kolbens eine geringfügige Leckage zwischen Arbeitskammer und Rückseitenkammer auftritt, so kann trotzdem ein Verlust von Hydraulikflüssigkeit an die äußere Umgebung durch die Kapselung der Rückseitenkammer vermieden werden. Weiter hin kann eine solche Leckage zwischen den Kammern, die bei einer gegebenen Bewegungsrichtung auftritt, durch eine nach folgende Rückwärtsbewegung zumindest teilweise wieder rück gängig gemacht werden. Die mit der Leckage-Anfälligkeit der herkömmlichen Kolbensysteme verbundenen Nachteile werden also vermieden .

Ein wesentlicher Vorteil der erfindungsgemäßen Übersetzungseinheit im Vergleich zu herkömmlichen reinen Balgsystemen liegt darin, dass wesentlich leichter eine hohe Steifigkeit und somit eine hohe Dynamik für die Bewegungsübertragung zwischen Antriebsseite und Abtriebsseite erreicht werden kann.

Im vorliegenden Zusammenhang soll unter einer "hohen Dynamik" der Übersetzungseinheit ein schnelles zeitliches Ansprechverhalten verstanden werden. Mit anderen Worten soll eine "hohe Dynamik" bedeuten, dass eine kurze, schnelle Bewegung auf der Antriebsseite mit geringem Zeitversatz und geringer zeitlicher Dehnung in eine entsprechend kurze, schnelle Bewegung auf der Abtriebsseite übersetzt wird.

Vorteilhaft im Zusammenhang mit der vorliegenden Erfindung ist, dass das Balgelement nur im Bereich der Rückseitenkammer zum Einsatz kommt und somit die Bereiche zwischen den Balg wellen nicht zum beschriebenen Arbeitsvolumen beitragen.

Zweckmäßig liegen also im Bereich des eigentlichen Arbeitsvolumens keinerlei Balgelemente als Begrenzungselemente vor. Hierdurch wird auch eine hohe Steifigkeit für die Übertragung erreicht, weil das (immer auch in seitlicher Richtung) verformbare Balgelement nur zu einer Deformation der Rückseitenkammer führt. Eine unerwünschte seitliche Verformbarkeit im Bereich des Arbeitsvolumens wird dagegen vermieden.

Insgesamt wird also durch die beschriebene Übersetzungseinheit eine Übersetzung mit hoher Dynamik, hoher Steifigkeit (und damit geringen Energieverlusten) bei einer gleichzeitig hohen Dichtigkeit gegenüber der Hydraulikflüssigkeit ermöglicht.

Die erfindungsgemäße Aktoreinrichtung weist einen Aktor und eine zu dem Aktor mechanisch in Serie geschaltete hydraulische Übersetzungseinheit auf. Insbesondere ist der Aktor auf der Antriebsseite mechanisch mit der Übersetzungseinheit verbunden. Auf diese Weise kann eine Bewegung des Aktors mittels der hydraulischen Übersetzungseinheit in eine entsprechende mechanische Bewegung auf der Abtriebsseite übersetzt werden. Dabei werden durch das in der Übersetzungseinheit realisierte Übersetzungsverhältnis sowohl der Hub der Bewegung als auch die übertragene Kraft entsprechend verändert. Die Vorteile der erfindungsgemäßen Aktoreinrichtung entsprechenden weiter oben beschriebenen Vorteilen der erfindungsgemäßen Übersetzungseinheit .

In der zweiten Kammer der Übersetzungseinheit ist ein zweiter Kolben entlang einer Kolbenachse beweglich angeordnet ist, so dass dieser zweite Kolben die zweite Kammer in eine volumenmäßig variable zweite Arbeitskammer und eine zweite Rückseitenkammer trennt, wobei die zweite Rückseitenkammer zumindest teilweise durch ein zweites Balgelement mit variabler axialer Länge begrenzt ist. Erfindungsgemäß sind also sowohl die Antriebskammer als auch die Abtriebskammer auf die zuvor beschriebene Weise ausgelegt. Hierdurch kommen die beschriebenen Vorteile in Bezug auf die flüssigkeitsdichte Kapselung, die hohe Steifigkeit und hohe Dynamik für die gesamte Übersetzungseinheit besonders wirksam zum Tragen. Insbesondere können bei dieser "doppelseitigen" Ausführungsform auch alle übrigen vorteilhaften Ausgestaltungen entsprechend auf beiden Seiten der Übersetzungseinheit realisiert sein - also jeweils sowohl auf der Antriebsseite als auch auf der Abtriebsseite.

Die Übersetzungseinheit weist zusätzlich eine Vorratskammer für die Hydraulikflüssigkeit auf, welche mit der wenigstens einen Rückseitenkammer fluidisch gekoppelt und/oder koppelbar ist. Dies kann vor allem dann vorteilhaft sein, wenn eine Bewegung des Kolbens für die Rückseitenkammer nicht vollständig volumenneutral ist. Eine kleine Volumenänderung der Rückseitenkammer kann somit durch eine fluidische Ankopplung an die Vorratskammer vorteilhaft ausgeglichen werden.

Eine solche hohe Dynamik kann bei der beschriebenen Übersetzungseinheit vor allem dadurch leicht realisiert werden, dass das Arbeitsvolumen insgesamt gering gehalten werden kann. Das Arbeitsvolumen entspricht dabei dem gesamten Volumen an Hydraulikflüssigkeit, welches für die Übertragung einer Bewegung mittels der Übersetzungseinheit zur Verfügung steht. Dieses Arbeitsvolumen setzt sich aus den Volumina der beiden einander zugewandten Arbeitskammern (auf der An triebs- und der Abtriebsseite) sowie den Volumenanteilen der verbindenden Leitung (en) sowie der zusätzlichen damit fluidisch verbundener Vorratskammer zusammen. Je geringer dieses Arbeitsvolumen gehalten werden kann, desto steifer und dynamischer verhält sich die Übersetzungseinheit.

Die jeweilige Rückseitenkammer ist durch eine jeweilige seitliche Begrenzungswand begrenzt, welche in eine jeweilige gerade Zylinderwand und in das jeweilige Balgelement unterteilt ist.

Vorteilhafte Ausgestaltungen und Weiterbildungen der Erfindung gehen aus den von den Ansprüchen 1 und 13 abhängigen Ansprüchen sowie der folgenden Beschreibung hervor. Dabei können die beschriebenen Ausgestaltungen der Übersetzungseinheit und der Aktoreinrichtung allgemein vorteilhaft miteinander kombiniert werden.

So kann die Vorratskammer für die Hydraulikflüssigkeit mit beiden Rückseitenkammern fluidisch gekoppelt sein.

So kann der erste Kolben der ersten Kammer einen Kolbenkörper und einen Kolbenbolzen aufweisen. Weiterhin kann die zugeordnete erste Rückseitenkammer in ihrem von dem Kolbenkörper abgewandten axialen Endbereich eine Endplatte aufweisen, durch welche der Kolbenbolzen in die erste Rückseitenkammer hineinragt und mit welcher der Kolbenbolzen fest verbunden ist.

Unter dem Begriff "fest verbunden" soll dabei insbesondere verstanden werden, dass der Kolbenbolzen und die Endplatte in axialer Richtung nicht relativ zueinander bewegt werden können. Wahlweise können sie auch bezüglich der übrigen Raumrichtungen gegeneinander fixiert sein. Die eigentliche Trennung der ersten Kammer in eine Arbeitskammer und eine Rückseitenkammer wird also durch den Kolbenkörper bewirkt. Der Kolbenbolzen bewirkt dagegen die Kraftübertragung - also entweder die Übertragung einer Kraft von einem äußeren Element auf die Übersetzungseinheit auf der Antriebsseite oder die Übertragung einer Kraft von der Übersetzungseinheit auf ein äußeres Element auf der Abtriebsseite. Die Seite der ersten Kammer, auf welcher die beschriebene Endplatte angeordnet ist, wird auch als Stirnseite bezeichnet. Um im Bereich dieser Stirnseite eine Kraftübertragung zwischen dem Kolben und einem außenliegenden Element zu ermöglichen, ragt der Kolben bolzen durch die Endplatte hindurch. Da das weiter oben beschriebene Balgelement einen Längenausgleich der Rückseitenkammer ermöglicht, kann der Kolbenbolzen trotzdem mit der Endplatte fest verbunden sein. Ein wesentlicher Vorteil einer solchen festen Verbindung ist, dass sie fluiddicht für die verwendete Hydraulikflüssigkeit ausgebildet werden kann. Beispielsweise können Kolbenbolzen und Endplatte kraftschlüssig und/oder formschlüssig miteinander verbunden sein. Sie können insbesondere miteinander verschweißt und/oder verklebt sein.

Allgemein vorteilhaft kann die erste Kammer so ausgestaltet sein, dass bei einer Bewegung des ersten Kolbens entlang der Kolbenachse für das Volumen der ersten Rückseitenkammer ein Volumenausgleich durch das erste Balgelement erfolgt.

Insbesondere kann die erste Kammer so ausgestaltet sein, dass eine Bewegung des Kolbens für die Rückseitenkammer im Wesentlichen volumenneutral erfolgen kann. Unter "im Wesentlichen volumenneutral" soll hier beispielsweise verstanden werden, dass sich bei einer Kolbenbewegung im vorgegebenen Arbeitsbereich das Volumen der Rückseitenkammer um nicht mehr als 10 % ändert. Besonders vorteilhaft kann eine solche Volumenänderung auf höchstens 5 % begrenzt sein. Um dies zu erreichen, kann insbesondere die Rückseitenkammer als Ganzes so ausgestaltet sein, dass die in der Rückseitenkammer wirksame hydraulische Fläche des beweglichen Kolbens im Wesentlichen der effektiven hydraulischen Fläche des Balgelements entspricht. Dann kann eine durch die Kolbenbewegung bewirkte Volumenänderung der Rückseitenkammer im Wesentlichen durch eine entsprechende, entgegen gerichtete Volumenänderung des Balgelements ausgeglichen werden.

Da in der Praxis die Bewegung des Kolbens nur annähernd volumenneutral und nicht exakt volumenneutral durchgeführt werden kann, kann optional ein zusätzlicher Volumenausgleich für die Rückseitenkammer vorgesehen sein. Hierzu kann beispielsweise eine Leitung vorgesehen sein, welche die Rückseitenkammer der ersten Kammer mit der entsprechenden Rückseitenkammer der zweiten Kammer fluidisch verbindet. Ein solcher gegenseitiger Ausgleich zwischen Antriebsseite und Abtriebsseite kann insbesondere dann ausreichend sein, wenn das hydraulische Flächenverhältnis der beiden Balgelemente (auf Antriebs- und Abtriebsseite) dem hydraulischen Flächenverhältnis der beiden Kolbenelemente (auf Antriebs- und Abtriebsseite) im Wesentlichen entspricht.

Allgemein vorteilhaft kann die erste Rückseitenkammer fluiddicht gegen die äußere Umgebung gekapselt sein. Insbesondere kann die Rückseitenkammer in Bezug auf die verwendete Hydraulikflüssigkeit abgedichtet sein. Hierdurch wird selbst bei einer Leckage zwischen Arbeitskammer und Rückseitenkammer ein Flüssigkeitsaustausch mit der äußeren Umgebung vorteilhaft verhindert .

Das erste Balgelement kann beispielsweise als Faltenbalg und/oder als Membranbalg ausgestaltet sein. Es kann also insbesondere als ringförmige Seitenwand mit einem faltenartigen Profil ausgebildet sein. Das faltenartige Profil kann insbesondere eine regelmäßige Abfolge aus einer Mehrzahl von Wellen auf weisen. Eine solche ringförmige Seitenwand kann vorteilhaft durch eine entsprechend gefaltete beziehungsweise gewellte elastisch verformbare (aber flüssigkeitsdichte) Membran gebildet sein. Allgemein und unabhängig von der genauen geometrischen Ausgestaltung kann das Balgelement vorteilhaft aus einem metallischen Material gebildet sein oder zumindest ein solches metallisches Material umfassen.

Da das beschriebene Balgelement nur für einen Volumenausgleich der Rückseitenkammer benötigt wird, kann es vorteilhaft mit einer wesentlich geringeren Wandstärke und einer wesentlich geringeren Steifigkeit ausgeführt werden, als wenn der Balg selbst das Hubelement der Arbeitskammer ausbilden würde. Im Vergleich zu einem reinen Balgsystem nach dem Stand der Technik kann also insbesondere eine vergleichsweise geringe Wandstärke des Balgelements gewählt werden. Hierdurch werden auch die durch die Bewegung des Balgelements anfallen den mechanischen Verluste vorteilhaft reduziert.

Die erste Kammer ist seitlich durch eine Zylinderwand begrenzt, wobei der zugeordnete erste Kolben im Verhältnis zu der Zylinderwand axial beweglich angeordnet ist. Die Bewegungsrichtung des Kolbens entspricht dabei der Zylinderachse. Zwischen der Zylinderwand und dem ersten Kolben kann vorteilhaft ein Spalt mit einer Spalt breite im Bereich unterhalb von 10 µm und insbesondere zwischen 0,5 µm und 10 µm ausgebildet sein. Bei einer Bewegung des Kolbens kann durch den geringen seitlichen Spalt hindurch eine geringe Menge Hydraulikflüssigkeit zwischen der Arbeitskammer und der Rückseitenkammer bewegt werden. Eine Spalt breite im beschriebenen Bereich ist einerseits ausreichend hoch, um den Kolben reibungsarm in axialer Richtung bewegen zu können. Andererseits ist die Spaltbreite ausreichend niedrig, um das hindurchströmende Flüssigkeitsvolumen gering zu halten. Dies ist vorteilhaft, um einen Druckverlust (oder eine unerwünschte

Druckerhöhung) im Bereich der Arbeitskammer möglichst gering zu halten, was wiederum die mechanischen Verluste insgesamt minimiert und die Steifigkeit und Dynamik der Bewegungsübertragung verbessert. Prinzipiell ist aber die Spaltbreite nach unten hin nicht begrenzt, da beim Honen auch Übergangsanpassungen möglich sind. Die Form der Zylinderwand kann insbesondere kreiszylindrisch sein. Dies ist jedoch nicht unbedingt nötig, und es können grundsätzlich auch gerade Zylinder mit anderen Querschnittsgeometrien zum Einsatz kommen .

Allgemein vorteilhaft kann der beschriebene Zylinderspalt dichtungsfrei ausgebildet sein. Mit anderen Worten wird dann der Kolben ohne ein zusätzliches Dichtungselement relativ zu der umgebenden Zylinderwand bewegt. Bei dieser Ausführungsform soll also neben dem eigentlichen Material des Kolbenkörpers kein zusätzliches Dichtungselement aus einem unter schiedlichen Material zwischen dem Kolbenkörper und der Zylinderwand vorliegen.

Allgemein kann die hydraulische Übersetzungseinheit mit einer Hydraulikflüssigkeit befüllt sein. Bei dieser Ausführungsform ist also die Hydraulikflüssigkeit bereits Teil der Übersetzungseinheit. Zur Realisierung der Erfindung reicht es allerdings grundsätzlich aus, wenn die Übersetzungseinheit ein zur Befüllung mit der Hydraulikflüssigkeit geeignetes Kammersystem aufweist. Eine geeignete Hydraulikflüssigkeit ist beispielsweise ein Silikonöl, ein Glykol oder aber auch ein Flüssigmetall. Wenn die Übersetzungseinheit mit der Hydraulikflüssigkeit befüllt ist, findet sich diese sowohl in der Antriebskammer als auch in der Abtriebskammer (und dabei gegebenenfalls jeweils sowohl in der Arbeitskammer als auch in der Rückseitenkammer) und in der Vorratskammer, zusätzlich in einer oder mehreren optional vorhandenen Verbindungsleitungen.

Allgemein können Antriebskammer und Abtriebskammer entweder durch eine Leitung fluidisch verbunden sein oder aber auch als Teilbereiche des übergeordneten Kammervolumens direkt ineinander übergehen.

Die Ankopplung an die Vorratskammer ist aber auch nützlich, um eine durch eine Temperaturänderung verursachte Volumenänderung an Hydraulikflüssigkeit auszugleichen. Bei einer besonders bevorzugten Variante dieser Ausführungsform ist die Vorratskammer druckbeaufschlagbar. Eine solche Möglichkeit zur Druckbeaufschlagung kann beispielsweise durch ein zusätzliches Balgelement, eine vorgespannte Feder und/oder einen Kolben im Bereich der Vorratskammer realisiert sein. Hierüber kann die Vorratskammer mit einem Druck beaufschlagt werden, welcher zunächst beispielsweise höher oder niedriger sein kann als der Druck in der mit der Vorratskammer fluidisch gekoppelten Rückseitenkammer. So kann beispielsweise mittels eines im Bereich der Vorratskammer vor liegenden Stellelements das gesamte hydraulische System auf einen gewünschten Ausgangsdruck vorgespannt werden, wodurch insbesondere eine gewünschte Ausgangsposition eines auf der Abtriebsseite vorliegenden Abtriebskörpers eingestellt werden kann. Die sich jeweils einstellende Ausgangsposition des Abtriebskörpers hängt dabei von den Steifigkeiten der eingesetzten Balgelemente sowie den auf den auf den Stellkörper und den Abtriebskörper wirkenden Vorspannkräften ab.

Gemäß einer vorteilhaften Ausführungsform kann die Übersetzungseinheit als pumpbare Übersetzungseinheit ausgebildet sein, so dass durch mehrere aufeinanderfolgende Einzelbewegungen im Bereich der Antriebskammer eine summierte Bewegung im Bereich der Abtriebskammer erzeugt werden kann. Ein solcher Pumpeffekt ist beispielsweise in der DE 102017214697 Al und in der europäischen Patentanmeldung mit dem Aktenzeichen 17203689.9 beschrieben, welche daher in den Offenbarungsgehalt der vorliegenden Anmeldung mit einbezogen sein sollen. Bei einer solchen Ausführungsform erfolgt nicht nur eine Übersetzung, sondern auch eine Summierung der Einzelbewegungen eines Antriebskörpers zu einer summierten Gesamtbewegung eines Abtriebskörpers. Hierzu können beispielsweise ein oder mehrere Rückschlagventile in der hydraulischen Leitung zwischen der antriebsseitigen Arbeitskammer und der abtriebsseitigen Arbeitskammer vorgesehen sein. Optional können zusätzlich ein oder mehrere Pumpreservoirs für die Hydraulikflüssigkeit vorgesehen sein, welche hydraulisch mit dem Arbeitsvolumen koppelbar sind.

Gemäß einer vorteilhaften Ausführungsvariante kann die Übersetzungseinheit dazu ausgebildet sein, eine Bewegung eines im Bereich der Antriebskammer angeordneten Antriebskörpers mit einem Übersetzungsverhältnis von weniger als 1 auf einen im Bereich der Abtriebskammer angeordneten Abtriebskörper zu übertragen. Bei einem Übersetzungsverhältnis unterhalb von 1 ist der Hub auf der Abtriebsseite größer als der Hub auf der Antriebsseite. Unter dem hier genannten Übersetzungsverhältnis soll also allgemein das Verhältnis vom Hub auf der Antriebsseite zum Hub auf der Abtriebsseite der jeweiligen Übersetzungsvorrichtung verstanden werden. Bei einem größer werdenden Hub ist dieses Übersetzungsverhältnis entsprechend kleiner als 1. Auf diese Weise kann also auf der Abtriebsseite ein größerer Hub erzielt werden als der Hub, der auf der Antriebsseite die Bewegung auslöst. Auf diese Weise kann insbesondere bei einer Aktoreinrichtung mit einem Festkörperaktor der Nachteil des vergleichsweise geringen Primär-Hubs des Festkörperaktors ausgeglichen werden. Besonders vorteilhaft kann die hydraulische Übersetzungseinheit allgemein ein Übersetzungsverhältnis von 1:2 oder weniger aufweisen. Mit einem Übersetzungsverhältnis unterhalb von 1:2 wird also eine noch höhere als die 2fache Hubvergrößerung erhalten. Mit anderen Worten ist dann der Hub auf der Abtriebsseite im Verhältnis zum Hub auf der Antriebsseite zumindest verdoppelt. Besonders vorteilhat kann das Übersetzungsverhältnis im Bereich zwischen 1:10 und 1:2 liegen.

Gemäß einer alternativen vorteilhaften Ausführungsvariante kann die Übersetzungseinheit aber auch dazu ausgebildet sein, eine Bewegung eines im Bereich der Antriebskammer angeordneten Antriebskörpers mit einem Übersetzungsverhältnis von mehr als 1 auf einen im Bereich der Abtriebskammer angeordneten Abtriebskörper zu übertragen. Auf diese Weise kann auf der Abtriebsseite eine größere Kraft wirken als die Kraft, welche auf der Antriebsseite zur Verfügung steht (bei einer Verkleinerung des Hubs) . Diese Ausführungsvariante ist also allgemein für Anwendungen vorteilhaft, bei denen hohe Kräfte benötigt werden. Besonders vorteilhaft kann das Übersetzungsverhältnis der hydraulischen Übersetzungseinheit allgemein größer 2 sein und insbesondere im Bereich zwischen 2 und 10 liegen .

Um ein gewünschtes Übersetzungsverhältnis einzustellen, werden zweckmäßig die hydraulischen Flächen der Kolben in der Antriebskammer und der Abtriebskammer in einem entsprechenden Verhältnis dimensioniert.

Allgemein vorteilhaft kann das gesamte Arbeitsvolumen der hydraulischen Übersetzungseinheit 1 ml oder weniger betragen. Insbesondere kann das Arbeitsvolumen im Bereich unterhalb von 0,5 ml oder sogar unterhalb von 0,1 ml und insbesondere zwischen 0,01 ml und 0,5 ml beziehungsweise zwischen 0,01 ml und 0,1 ml liegen. Mit einem derart niedrigen Arbeitsvolumen kann besonders leicht eine Übersetzungseinheit mit einer hohen Steifigkeit und/oder hohen Dynamik realisiert werden.

Vorteilhaft kann das gesamte Arbeitsvolumen niedriger sein als das gesamte Rückseitenvolumen. Dieses Rückseitenvolumen setzt sich hierbei aus den Volumina von beiden vorhandenen Rückseitenkammern sowie gegebenenfalls ein oder mehreren mit diesen fluidisch gekoppelten Leitungen und Vorratskammer zusammen.

Gemäß einer bevorzugten Ausführungsform der Aktoreinrichtung ist der mit der hydraulischen Übersetzungseinheit in Serie geschaltete Aktor ein Festkörperaktor. Bei einem solchen Festkörperaktor kommen die beschriebenen Vorteile der erfindungsgemäßen Übersetzungseinheit besonders wirksam zum Tragen, da insbesondere der Hub eines Festkörperaktors in der Praxis stark begrenzt ist und zur Leistungsübertragung hohe Steifigkeiten in Abhängigkeit vom Aktortyp vorteilhaft sind. So weist ein Festkörperaktor typischerweise eine hohe Eigenfrequenz und damit eine vorteilhaft hohe Dynamik auf.

Gemäß einer besonders bevorzugten Variante ist der Festkörperaktor ein Piezoaktor. Piezoaktoren haben sich in der Vergangenheit als besonders vielversprechende Ausgestaltungen des Festkörperaktors in einer hydraulischen Aktoreinrichtung erwiesen. Mit ihnen kann eine besonders präzise Bewegung erreicht werden. Ihr Hauptnachteil, nämlich ihr geringer mechanischer Hub, kann wie beschrieben durch die nachfolgende Hydraulikeinheit ausgeglichen werden.

Besonders bevorzugt ist der Piezoaktor der Aktoreinrichtung als Piezostapelaktor ausgebildet. Ein Piezostapelaktor ist eine aus dem Stand der Technik grundsätzlich bekannte Serienschaltung aus mehreren einzelnen Piezoelementen, welche als Schichtstapel angeordnet sind. Ein solcher Stapelaktor ist besonders vorteilhaft, um auch schon mit dem Piezoaktor eine höhere Bewegungsamplitude zu erreichen als dies mit einem einzelnen Piezoelement möglich wäre.

Die Erfindung ist jedoch nicht auf einen Piezoaktor als Festkörperaktor beschränkt. So gelten viele der bekannten Vorteile und Nachteile von Piezoaktoren auch für andere Arten von Festkörperaktoren. Auch für sie kann ein vergleichsweise geringer Ausgangs-Hub durch die nachfolgende hydraulische Übersetzungseinheit vergrößert werden. Gemäß einer bevorzugten Ausführungsvariante ist der genannte Festkörperaktor beispielsweise ein magnetostriktiver Aktor oder ein elektrostriktiver Aktor. Alternativ kann es sich bei dem Festkörperaktor auch um einen Formgedächtnis-Aktor handeln. Gemäß einer weiteren vorteilhaften Ausführungsform der Aktoreinrichtung kann diese zwei oder mehrere Teilsysteme auf weisen, wobei jedes Teilsystem einen Aktor und eine zu dem Aktor mechanisch in Serie geschaltete hydraulische Übersetzungseinheit aufweist. Vorteilhaft sind die einzelnen Übersetzungseinheiten im Bereich ihrer jeweiligen Abtriebskammern an ein gemeinsames übergeordnetes Abtriebselement gekoppelt oder koppelbar, sodass eine gleichzeitige (und in die gleiche Richtung wirkende) Ansteuerung der einzelnen Aktoren zu einer gemeinsamen Bewegung des Abtriebselements mittels der einzelnen Übersetzungseinheiten führt. Durch eine derartige Verdoppelung bzw. Vervielfachung der Aktoren und hydraulischen Übersetzungseinheiten und durch ihre mechanische Parallelschaltung kann insbesondere bewirkt werden, dass für die Bewegung des Abtriebskörpers eine entsprechend höhere Energie zur Verfügung steht. Besonders vorteilhaft ist eine symmetrische, gleichartige Ausgestaltung der einzelnen Teilsysteme, wodurch etwa eine Verdoppelung bzw. Vervielfachung der zur Verfügung stehenden Energie erreicht werden kann. Insbesondere bei einer spiegelsymmetrischen Anordnung von zwei Teilsystemen kann dabei vorteilhaft eine annähernde Verdoppelung der Energie bei einer geraden, flüssigen Bewegung des Abtriebskörpers erreicht werden, da Verkantungen vorteilhaft vermieden werden. Die mechanische Ankopplung an einen gemeinsamen Abtriebskörper kann entweder durch direkte Verbindung oder aber auch indirekt über eine optionale weitere mechanische Übersetzungseinheit erfolgen. Die Ankopplung an den gemeinsamen Abtriebskörper kann auch indirekt über zwei oder mehr einzelne mechanisch parallel geschaltete weitere mechanische Übersetzungseinheiten erfolgen, so dass die einzelnen parallelen Gesamtsysteme also erst nach dieser zusätzlichen Über setzungsstufe mechanisch verbunden sind. Besonders vorteilhafte Ausgestaltungen eines solchen Systems werden in der von der Siemens AG am selben Anmeldetag eingereichten internationalen Anmeldung mit dem Titel "Hubübertrager für eine Aktoreinrichtung" näher beschrieben.

Nachfolgend wird die Erfindung anhand einiger bevorzugter Ausführungsbeispiele unter Bezugnahme auf die angehängten Zeichnungen beschrieben, in denen:
- Figur 1: eine schematische Darstellung einer nicht zur Erfindung gehörenden Aktoreinrichtung mit einem Kolbensystem nach dem Stand der Technik zeigt,
- Figur 2: eine Detailansicht einer möglichen Variante eines Kolbens aus der Figur 1 zeigt,
- Figur 3: eine schematische Darstellung einer nicht zur Erfindung gehörenden Aktoreinrichtung mit einem Balgsystem nach dem Stand der Technik zeigt,
- Figur 4: eine schematische Darstellung einer nicht zur Erfindung gehörenden Aktoreinrichtung zeigt,
- Figur 5: eine Detailansicht der nicht zur Erfindung gehörenden Aktoreinrichtung der Figur 4 zeigt,
- Figur 6: eine schematische Darstellung einer Aktoreinrichtung nach einem ersten Ausführungsbeispiel der Erfindung zeigt und
- Figur 7: eine schematische Darstellung einer Aktoreinrichtung nach einem zweiten Ausführungsbeispiel der Erfindung zeigt.

In den Figuren sind gleiche oder funktionsgleiche Elemente mit gleichen Bezugszeichen versehen.

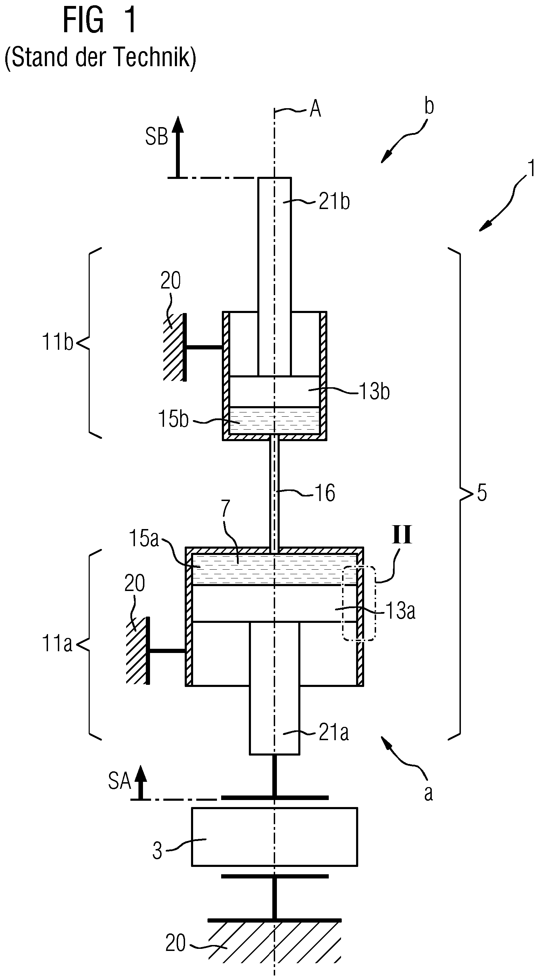

In Figur 1 ist eine Aktoreinrichtung 1 nach dem Stand der Technik im schematischen Längsschnitt gezeigt. Die Aktoreinrichtung weist einen Aktor 3 und eine zu dem Aktor mechanisch in Serie geschaltete hydraulische Übersetzungseinheit 5 auf. Entsprechend kann die im Bild unten dargestellte Seite a der Übersetzungseinheit als deren Antriebsseite und die im Bild oben dargestellte Seite b als deren Abtriebsseite bezeichnet werden. Auf der Antriebsseite a kann mit dem Aktor 3 ein mechanischer Hub SA eines Antriebskörpers 21a generiert werden. Dieser Hub SA kann durch die hydraulische Übersetzungseinheit 5 auf deren Abtriebsseite b in einen Hub SB des Abtriebskörpers 21b übersetzt werden. Das Verhältnis zwischen dem Hub SB und dem Hub SA entspricht dem Übersetzungsverhältnis der hydraulischen Übersetzungseinheit 5. Es kann prinzipiell größer, gleich oder auch kleiner als 1 sein.

Die Übersetzungseinheit 5 der Figur 1 weist zwei Kammern auf, eine Antriebskammer 11a und eine Abtriebskammer 11b. Als Teil der Antriebskammer 11a ist eine erste Arbeitskammer 15a vor gesehen und als Teil der Abtriebskammer 11b ist eine zweite Arbeitskammer 15b vorgesehen. Diese beiden Arbeitskammern sind mit einer Hydraulikflüssigkeit 7 befüllt und miteinander hydraulisch über eine Hydraulikleitung 16 gekoppelt. Es ergibt sich also ein Gesamt-Arbeitsvolumen für die Hydraulikflüssigkeit, welches sich aus den beiden Arbeitskammern und der Hydraulikleitung zusammensetzt. Um beim Betrieb der Übersetzungseinheit 5 Hydraulikflüssigkeit zwischen den beiden Arbeitskammer hin und her zu fördern, sind zwei Kolben vorgesehen, nämlich ein erster Kolben 13a (als Antriebskolben) und ein zweiter Kolben 13b (als Abtriebskolben) . Der erste Kolben 13a weist einen Kolbenbolzen auf, welcher hier den Antriebskörper 21a ausbildet. Das Übersetzungsverhältnis der Übersetzungseinheit 5 ist durch das Verhältnis der hydraulischen Flächen der beiden Kolben 13a und 13b bestimmt (genauer gesagt durch das Verhältnis der entsprechenden Kolbenkörper) . Die jeweilige Fläche geht nämlich linear in die Volumenänderung ein, welche sich bei einer entsprechenden axialen Bewegung des jeweiligen Kolbens ergibt. Da das gesamte Arbeitsvolumen konstant ist, führt eine axiale Bewegung des Antriebskolbens 13a zu einer entsprechend vergrößerten oder verkleinerten axialen Bewegung des Abtriebskolbens 13b. Beim gezeigten Beispiel ist die Fläche des Abtriebskolbens 13b vergleichsweise kleiner, sodass sich auf der Abtriebsseite b ein entsprechend vergrößerter Hub SB ergibt, wie hier durch die größere Länge des Pfeils angedeutet ist. Unter der genannten axialen Bewegungsrichtung der Kolben soll hier jeweils eine Bewegung entlang der lokalen Längsachse A verstanden werden. Beim Beispiel der Figur 1 fällt diese Achse für die beiden Kolben zu einer gemeinsamen Längsachse A zusammen (was jedoch bei anderen Ausführungsformen nicht unbedingt erforderlich ist) . Die mechanische Masse ist an verschiedenen Stellen der Aktoreinrichtung symbolisch dargestellt und jeweils mit 20 bezeichnet.

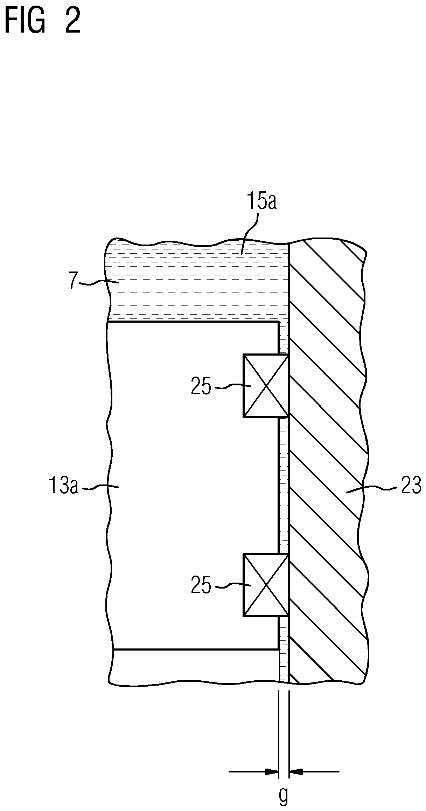

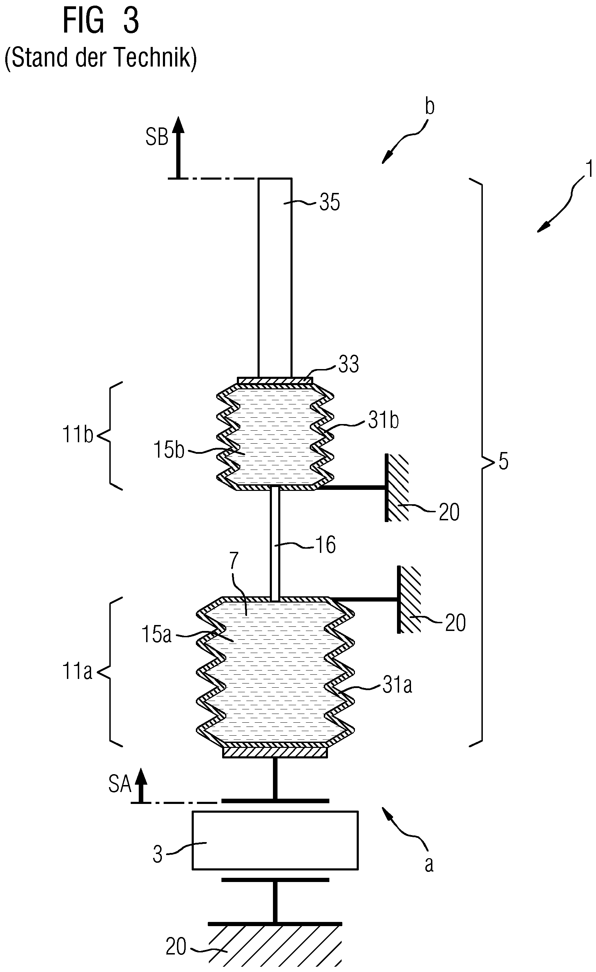

Wie schon weiter oben beschrieben, liegt ein wesentlicher Nachteil eines solchen Kolbensystems darin, dass die Abdichtung der beiden Arbeitskammern 15a und 15b gegen die beiden beweglichen Kolben 13a und 13b schwierig ist. Die Schwierigkeit der fluidischen Abdichtung wird durch Figur 2 näher illustriert. Figur 2 zeigt eine Detailansicht für eine mögliche Variante des Antriebskolbens 13a der Figur 1. Gezeigt ist in etwa der in Figur 1 durch einen gestricheltes Oval markierte Bereich. Dies ist der Bereich, in dem der Antriebskolben 13a in axialer Richtung an einer Zylinderwand 23 vorbei gleitet, welche die Antriebskammer in seitlicher Richtung nach außen hin begrenzt. Bei der axialen Bewegung soll die Hydraulikflüssigkeit 7 möglichst innerhalb der ersten Arbeitskammer 15a verbleiben und nicht durch den Kolbenspalt hindurch in den (häufig offenliegenden) Bereich der Kolbenrückseite gelangen. Die Spaltbreite des Kolbenspalts ist in Figur 2 mit g bezeichnet. Diese Spaltbreite kann nicht beliebig klein gewählt werden, damit sich der Kolben 13a innerhalb der Zylinderwand 23 in axialer Richtung gut bewegen lässt. In der Übersetzungseinheit der Figur 2 ist er allerdings dadurch lokal verkleinert, dass zwei zusätzliche Dichtungselemente 25 zwischen dem Kolben 13a und der Zylinderwand eingefügt sind. Solche Dichtungselemente können helfen, um eine unerwünschte Leckage der Hydraulikflüssigkeit in die äußere Umgebung zu reduzieren. Sie führen jedoch häufig zu einer Beeinträchtigung in der Linearität und/oder in der Dynamik der Übersetzungseinheit, da es beim Betrieb zu einem ständigen Wechsel zwischen Haftreibungs-Zuständen und Gleitreibungs-Zuständen zwischen dem Kolben 13a und der Zylinderwand 23 kommt. Daher ist es vorteilhaft, solche zusätzlichen Dichtungselemente 25 nach Möglichkeit zu vermeiden. Figur 3 zeigt eine schematische Darstellung einer weiteren Aktoreinrichtung 1 nach dem Stand der Technik. Auch hier ist ein Aktor 3 mechanisch in Serie zu einer hydraulischen Übersetzungseinheit 5 angeordnet. Auch hier weist die hydraulische Übersetzungseinheit eine Antriebskammer 11a und eine Abtriebskammer 11b auf, wobei die beiden Arbeitsvolumina dieser Kammern durch eine Hydraulikleitung 16 gekoppelt sind. Im Unterschied zur vorhergehenden Variante sind hier die beiden Arbeitskammern 15a und 15b durch zwei zugeordnete Balgelemente begrenzt, nämlich einen Antriebsbalg 31a und einen Abtriebsbalg 31b. Diese beiden Antriebsbälge ersetzen von ihrer Funktion her die beiden Kolben aus der Übersetzungseinheit der Figur 1. Entsprechend ist auf der Antriebsseite a der Aktor 3 an eine Endplatte des Antriebsbalgs 31a gekoppelt. Ein entsprechender Hub SA führt zu einer Streckung oder Stauchung des Antriebsbalgs, und somit zu einer Volumenänderung der ersten Arbeitskammer 15a. Durch die fluidische Kopplung führt dies zu einer entsprechenden Volumenänderung in der zweiten Arbeitskammer 15b. Dies führt zu einer entsprechenden Streckung oder Stauchung des Abtriebsbalgs 31b und somit zu einem Hub SB auf der Abtriebsseite b, welcher auf einen Abtriebskörper 35 übertragen werden kann.

Bei einem solchen Balgsystem ist das Risiko der Leckage der Hydraulikflüssigkeit 7 deutlich reduziert. Allerdings ergeben sich die weiter oben beschriebenen Nachteile, vor allem in Bezug auf die verringerte Steifigkeit und Dynamik des Systems. Auch eine Temperaturkompensation ist hier nicht möglich. Bei einer Temperaturerhöhung steigt daher der Druck im Gesamtsystem an.

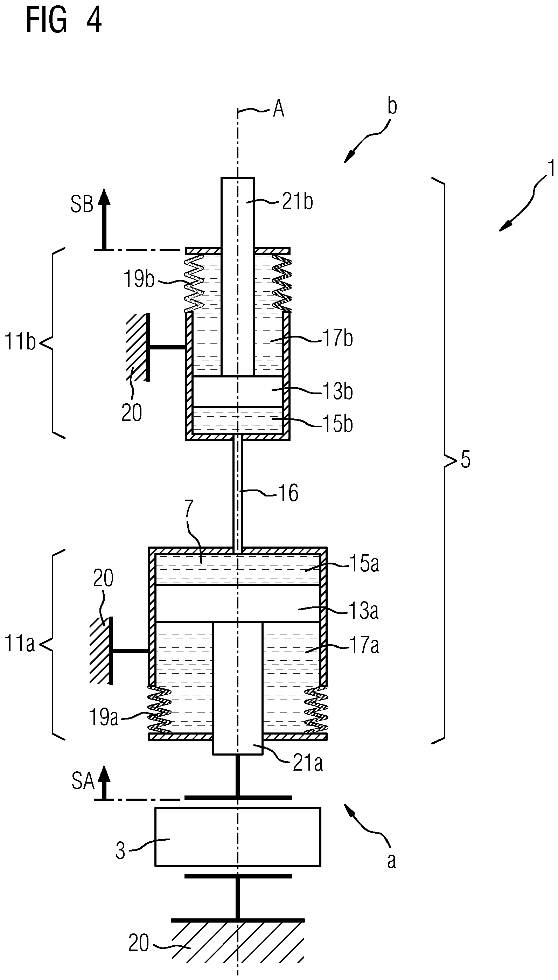

In Figur 4 ist eine schematische Darstellung einer nicht zur Erfindung gehörenden Aktoreinrichtung 1 gezeigt. Auch diese Aktoreinrichtung 1 weist einen Aktor 3 und eine mechanisch dazu in Serie angeordnete hydraulische Übersetzungseinheit 5 auf. Das grundlegende Wirkungsprinzip dieser Übersetzungseinheit 5 ist ähnlich wie bei der Übersetzungseinheit der Figur 1: Auch hier wird der Hub SA von einer Antriebsseite a durch das hydraulisch gekoppelte Zusammenspiel zweier Kolben 13a und 13b in einen Hub SB auf der Abtriebsseite b übersetzt. Auch hier wird das Übersetzungsverhältnis durch das Verhältnis der hydraulischen Flächen der beiden Kolbenkörper bestimmt. Auch hier bildet die erste Arbeitskammer 15a einen durch die Kolbenbewegung variierbaren Teilbereich der Antriebskammer 11a aus, und die zweite Arbeitskammer 15b bildet einen durch die dortige Kolbenbewegung variierbaren Teilbereich der Abtriebskammer 11b aus .

Im Unterschied zur Übersetzungseinheit der Figur 1 sind hier jedoch die rückseitigen Volumina der beiden Kammern 11a und 11b gekapselt ausgeführt. Mit anderen Worten ist jede der beiden Kammern 11a beziehungsweise 11b durch den Kolben in eine Arbeitskammer 15a beziehungsweise 15b und eine Rückseitenkammer 17a beziehungsweise 17b getrennt. Die beiden Rückseitenkammern sind dabei jeweils fluidisch gegen die äußere Umgebung gekapselt. Sie sind jeweils zumindest teilweise durch ein Balgelement 19a beziehungsweise 19b mit variabler axialer Länge begrenzt. Im gezeigten Beispiel ist jeweils ein Teil der Seitenwand der betreffenden Rückseitenkammer durch einen solchen Balg gebildet. Dieser Balg ermöglicht, dass die Rückseitenkammer gekapselt sein kann und dass trotzdem ein Volumenausgleich bei der Bewegung des jeweiligen Kolbens stattfinden kann. Beim Beispiel der Figur 4 ist sowohl die Antriebskammer 11a als auch die Abtriebskammer 11b mit einer solchen flexibel gekapselten Rückseitenkammer realisiert.

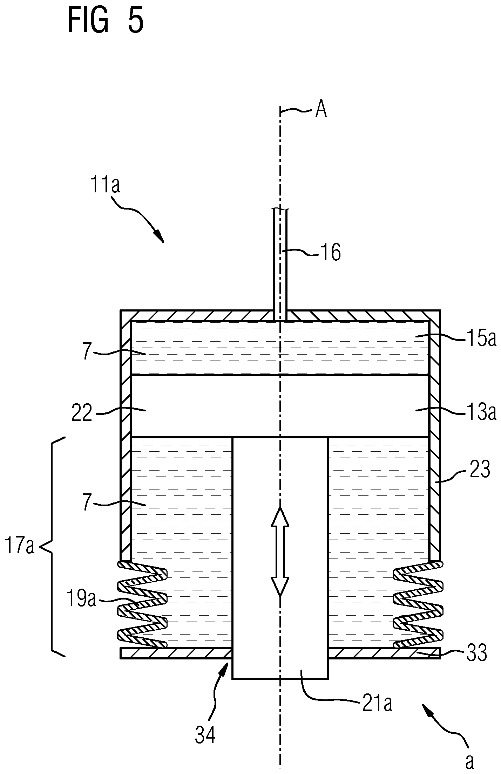

Figur 5 zeigt eine Detailansicht der Aktoreinrichtung der Figur 4 im Bereich der Antriebskammer 11a, um die Ausgestaltung mit der flexibel gekapselten Rückseitenkammer 17a näher zu verdeutlichen. Der erste Kolben 13a ist in einen Kolbenkörper 22 und einen Kolbenbolzen 21a unter teilt. Der Kolbenbolzen 21a bildet wiederum den Antriebskörper der Übersetzungseinheit. Der Kolbenkörper 22 unterteilt die Antriebskammer 11a in eine Arbeitskammer 15a und eine Rückseitenkammer 17a, sodass sich das Volumen der Arbeitskammer 15a bei einer Bewegung des Kolbens ändert. Auch das Volumen der Rückseitenkammer 17a würde sich bei einer starren Ausgestaltung der seitlichen Begrenzungswand ändern. Bei der Ausgestaltung ist jedoch die seitliche Begrenzungswand in eine gerade Zylinderwand 23 (im Bereich des Kolbenkörpers) und in ein seitlich begrenzendes Balgelement 19a (in dem vom Kolbenkörper abgewandten Teil der Rückseitenkammer) unterteilt. Dieses Balgelement 19a ist so flexibel, dass es in seiner axialen Länge variabel ist. Bei einer Änderung der axialen Länge sollte sich die Querschnittsfläche des Balgelements möglichst wenig ändern. Auf der von dem Kolbenkörper 22 abgewandten Seite ist das Balgelement 19a mit einer Endplatte 33 verbunden. Diese Endplatte 33 ist wiederum mit dem Kolbenbolzen 21a verbunden, welche durch sie hindurchgeführt ist. Diese Verbindung 34 zwischen Kolbenbolzen 21a und Endplatte 33 ist so ausgeführt, dass sie einerseits fluid dicht ist und dass andererseits die beiden Elementen nicht in axialer Richtung gegeneinander bewegt werden können. Durch diese starre Verbindung wird erreicht, dass das Balgelement 19 bei einer Abwärtsbewegung des Kolbens gestreckt wird und bei einer Aufwärtsbewegung des Kolbens gestaucht wird. Dieser axiale Längenausgleich führt zu dem beschriebenen Volumenaus gleich der Rückseitenkammer 17a bei einer Bewegung des Kolbens .

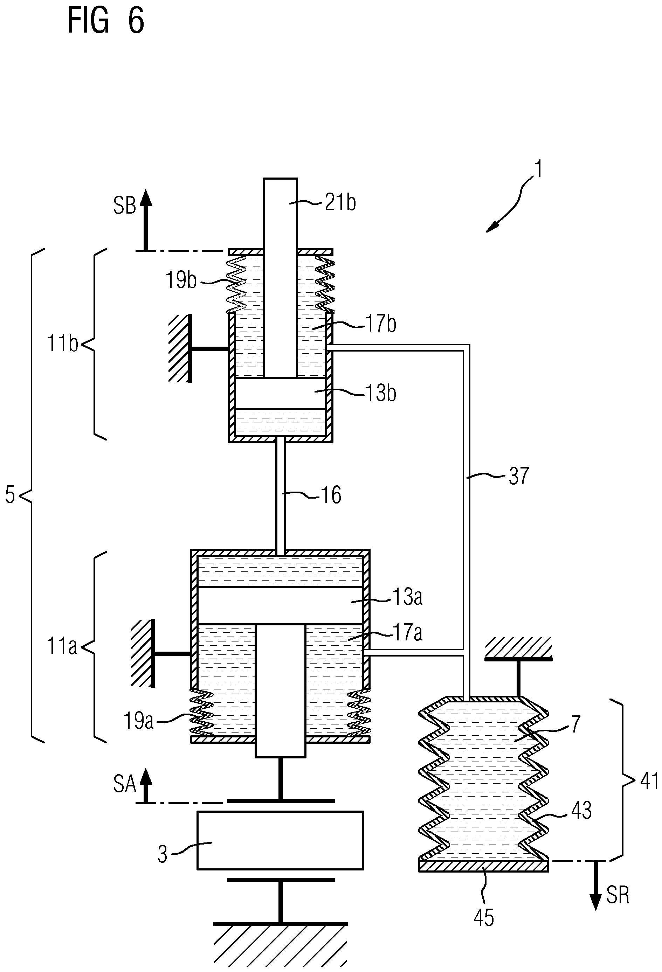

Wenn die hydraulische Fläche des Balgelements 19a gut genug an die hydraulische Fläche der Zylinderwand 23 angepasst ist (wobei die Fläche des Bolzens 21a jeweils hydraulisch nicht wirksam ist) und wenn gleichzeitig die rein axiale Flexibilität des Balgelements ausreichend hoch ist, kann auf weitere Maßnahmen zum Volumenausgleich der Rückseitenkammer verzichtet werden. Es können jedoch auch weiteren Maßnahmen zum Volumenausgleich ergriffen werden, wie dies in der Figur 6 für ein erstes Ausführungsbeispiel der Erfindung dargestellt ist: Figur 6 zeigt eine Aktoreinrichtung 1, deren hydraulische Übersetzungseinheit 5 im Wesentlichen ähnlich wie beim Beispiel der Figur 4 ausgestaltet ist. Auf die Darstellung der mechanischen Massen 20 ist hier der Übersichtlichkeit halber zum Teil verzichtet worden. Im Unterschied zur Figur 5 sind je doch hier die beiden Rückseitenkammern 17a und 17b durch eine zusätzliche Leitung 37 fluidisch mit einer Vorratskammer 41 gekoppelt, welche ebenfalls mit der Hydraulikflüssigkeit 7 befüllt ist. Auch diese Vorratskammer ist nach außen hin durch ein Balgelement 43 begrenzt, sodass das Volumen der Vorratskammer variabel ist. Auf der von der Leitung 37 abgewandten Seite des Balgelements 43 ist hier eine Deckplatte 45 angeordnet, mithilfe derer auch an der Vorratskammer ein Hub SR eingestellt werden kann. Durch diese Ausgestaltung wird erreicht, dass die Vorratskammer nicht nur unerwünschte Volumenänderungen der Rückseitenkammer ausgleichen kann, sondern dass sie auch gezielt zu einer Vorspannung des Systems verwendet werden kann. So kann die Vorratskammer 41 durch Einstellung einer vorgegebenen Hubposition SR im Bereich der Deckplatte 45 mit einem Druck beaufschlagt werden. Wenn gleichzeitig der Abtriebskörper 21b mit einer entsprechenden Gegenkraft beaufschlagt wird, kann mit diesem voreingestellten Druck bewirkt werden, dass der Abtriebskörper 21b auf ei ne bestimmte vorgegebene Hubposition SA voreingestellt werden kann. Eine Gegenkraft am Abtriebskörper 21b kann wiederum beispielsweise über eine zusätzliche Feder oder auch über die Steifigkeit des Balgs 19b eingestellt werden.

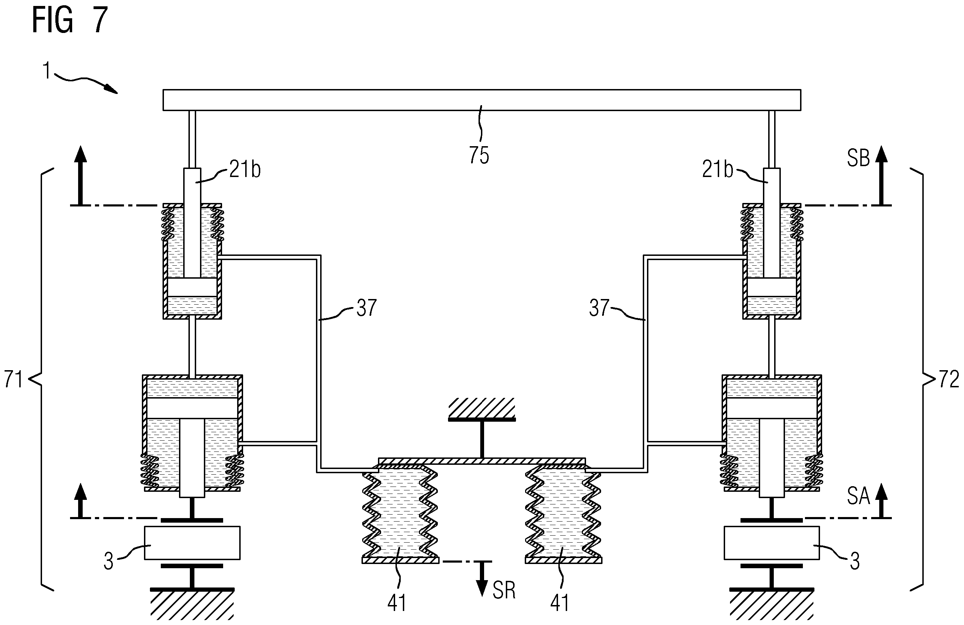

Die axial bewegliche Anordnung des Kolbens 13a innerhalb der Zylinderwand 23 kann ähnlich ausgestaltet sein wie bei der Detailansicht der Figur 2, allerdings hier ohne die dort ein gezeichneten zusätzlichen Dichtungselemente. Es soll also insbesondere bei der erfindungsgemäßen Ausgestaltung ein Kolbenspalt mit einheitlicher Spaltbreite g vorliegen. Durch den Kolbenspalt kann Hydraulikflüssigkeit von der Arbeitskammer 15a in die gekapselte Rückseitenkammer 17a lecken, aber nicht in die äußere Umgebung. Die hydraulische Übersetzungseinheit kann also insgesamt fluiddicht ausgeführt sein. Figur 7 zeigt eine schematische Darstellung einer Aktoreinrichtung nach einem zweiten Ausführungsbeispiel der Erfindung. Die Aktoreinrichtung der Figur 7 weist zwei zueinander symmetrisch ausgestaltete Teilsysteme auf, welche jeweils ähnlich wie beim Beispiel der Figur 6 ausgestaltet sein können. Die Aktoreinrichtung 1 weist also zwei einzelne Aktoren 3 auf, welche mechanisch parallel zueinander wirken. Diese beiden Aktoren 3 sind jeweils mit einer zugeordneten hydraulischen Übersetzungseinheit mechanisch in Serie geschaltet. Beim gezeigten Beispiel sind die einzelnen hydraulischen Übersetzungseinheiten fluidisch nicht miteinander gekoppelt. Alternativ könnten sie jedoch prinzipiell auch fluidisch gekoppelt sein, beispielsweise über eine Kopplung der beiden Vorratskammern 41 oder auch durch eine Ausgestaltung mit einer gemeinsamen Vorratskammer. Die beiden Teilsysteme 71 und 72 der Aktoreinrichtung sind hier mechanisch parallelgeschaltet. Die beiden Abtriebskörper 21b sind so ausgestaltet, dass durch gleichzeitige und gleichgerichtete Ansteuerung der bei den Aktoren gleichzeitig ein gleichgerichteter Hub SB bei den beiden Abtriebskörpern 21b erzeugt wird. Beim Beispiel der Figur 7 sind die beiden Abtriebskörper 21b gemeinsam mit einem übergeordneten Abtriebselement 75 gekoppelt. So kann erreicht werden, dass für die Bewegung des übergeordneten Abtriebselements 75 eine im Vergleich zu der Bewegung der einzelnen Abtriebskörper 21b in etwa verdoppelte mechanische Energie zur Verfügung steht.

## Patentansprüche

1. Hydraulische Übersetzungseinheit (5) für eine Aktoreinrichtung (1), welche mit einer Hydraulikflüssigkeit (7) befüllbar ist und eine erste und eine zweite Kammer (11a, 11b) aufweist, welche hydraulisch miteinander verbunden sind und von denen eine als Antriebskammer (11a) und die andere als Abtriebskammer (11b) ausgebildet ist,
- wobei in der ersten Kammer 11a ein erster Kolben (13a) entlang einer Kolbenachse (A) beweglich angeordnet ist, so dass dieser erste Kolben (13a) die erste Kammer (11a) in eine volumenmäßig variable erste Arbeitskammer (15a) und eine erste Rückseitenkammer (17a) trennt, wobei die erste Rückseitenkammer (17a) zumindest teilweise durch ein erstes Balgelement (19a) mit variabler axialer Länge begrenzt ist,
- wobei in der zweiten Kammer (11b) ein zweiter Kolben (13b) entlang einer Kolbenachse (A) beweglich angeordnet ist, so dass dieser zweite Kolben (13b) die zweite Kammer (11b) in eine volumenmäßig variable zweite Arbeitskammer (15b) und eine zweite Rückseitenkammer (17b) trennt, wobei die zweite Rückseitenkammer (17b) zumindest teilweise durch ein zweites Balgelement (19b) mit variabler axialer Länge begrenzt ist,
- und wobei
die Übersetzungseinheit (5) zusätzlich eine Vorratskammer (41) für die Hydraulikflüssigkeit (7) aufweist, welche mit der wenigstens einen Rückseitenkammer (17a) fluidisch gekoppelt und/oder koppelbar ist;
**dadurch gekennzeichnet, dass**
die jeweilige Rückseitenkammer (17a, 17b) durch eine jeweilige seitliche Begrenzungswand begrenzt ist, welche in eine jeweilige gerade Zylinderwand (23) und in das jeweilige Balgelement (19a, 19b) unterteilt ist.

2. Hydraulische Übersetzungseinheit (5) nach Anspruch 1, bei welcher die Vorratskammer (41) für die Hydraulikflüssigkeit (7) mit beiden Rückseitenkammern (17a, 17b) fluidisch gekoppelt ist.

3. Hydraulische Übersetzungseinheit (5) nach Anspruch 1 oder 2,
- bei welcher der erste Kolben (13a) einen Kolbenkörper (22) und einen Kolbenbolzen (21a) aufweist,
- und bei welcher die zugeordnete erste Rückseitenkammer (17a) in ihrem von dem Kolbenkörper (22) abgewandten axialen Endbereich eine Endplatte (33) aufweist, durch welche der Kolbenbolzen (21a) in die erste Rückseitenkammer (17a) hineinragt und mit welcher der Kolbenbolzen (21a) fest verbunden ist.

4. Hydraulische Übersetzungseinheit (5) nach einem der vorhergehenden Ansprüche, bei welcher die erste Kammer (1 1a) so ausgestaltet ist, dass bei einer Bewegung des ersten Kolbens (13a) entlang der Kolbenachse (A) für das Volumen der ersten Rückseitenkammer (17a) ein Volumenausgleich durch das erste Balgelement (19a) erfolgt.

5. Hydraulische Übersetzungseinheit (5) nach einem der vorhergehenden Ansprüche, bei welcher die erste Rückseitenkammer (17a) fluiddicht gegen die äußere Umgebung gekapselt ist.

6. Hydraulische Übersetzungseinheit (5) nach einem der vorhergehenden Ansprüche, bei welcher das erste Balgelement (19a) als Faltenbalg und/oder Membranbalg ausgestaltet ist.

7. Hydraulische Übersetzungseinheit (5) nach einem der vorhergehenden Ansprüche, bei welcher
- der zugeordnete erste Kolben (13a) im Verhältnis zu der Zylinderwand (23) axial beweglich angeordnet ist,
- wobei zwischen der Zylinderwand (23) und dem ersten Kolben (13) ein Spalt mit
einer Spaltbreite (g) unterhalb von 10 µm ausgebildet ist.

8. Hydraulische Übersetzungseinheit (5) nach einem der vorhergehenden Ansprüche, welche mit einer Hydraulikflüssigkeit (7) befüllt ist.

9. Hydraulische Übersetzungseinheit (5) nach einem der vorhergehenden Ansprüche, bei welcher die Vorratskammer (41) druckbeaufschlagbar ist.

10. Hydraulische Übersetzungseinheit (5) nach einem der vorhergehenden Ansprüche, welche als pumpbare Übersetzungseinheit ausgebildet ist, so dass durch mehrere aufeinanderfolgende Einzelbewegungen im Bereich der Antriebskammer (11a) eine summierte Bewegung im Bereich der Abtriebskammer (11b) erzeugt werden kann.

11. Hydraulische Übersetzungseinheit (5) nach einem der vorhergehenden Ansprüche, welche dazu ausgebildet ist, eine Bewegung eines im Bereich der Antriebskammer (11a) angeordneten Antriebskörpers (21a) mit einem Übersetzungsverhältnis von 1:2 oder weniger auf einen im Bereich der Abtriebskammer (11b) angeordneten Abtriebskörper (21b) zu übertragen.

12. Hydraulische Übersetzungseinheit (5) nach einem der Ansprüche 1 bis 10, welche dazu ausgebildet ist, eine Bewegung eines im Bereich der Antriebskammer (11a) angeordneten Antriebskörpers (21a) mit einem Übersetzungsverhältnis von wenigstens 2 auf einen im Bereich der Abtriebskammer (11b) angeordneten Abtriebskörper (21b) zu übertragen.

13. Aktoreinrichtung (1) mit einem Aktor (3) und einer zu dem Aktor (3) mechanisch in Serie geschalteten hydraulischen Übersetzungseinheit (5) nach einem der vorhergehenden Ansprüche .

14. Aktoreinrichtung (1) nach Anspruch 13, welche zwei Teilsysteme (71,72) aufweist, wobei jedes Teilsystem (71,72) einen Aktor (3) und eine zu dem Aktor (3) mechanisch in Serie geschaltete hydraulische Übersetzungseinheit (5) aufweist, wobei die beiden Übersetzungseinheiten (5) im Bereich ihrer jeweiligen Abtriebskammern (11b) mechanisch an ein gemeinsames übergeordnetes Abtriebselement (75) koppelbar sind, so dass eine gleichzeitige Ansteuerung der beiden Aktoren (3) zu einer gemeinsamen Bewegung des übergeordneten Abtriebselements (75) mittels der beiden hydraulischen Übersetzungseinheiten (5) führt.

## Claims

1. A hydraulic transmission unit (5) for an actuator device (1), which hydraulic transmission unit can be filled with hydraulic fluid (7) and comprises a first and a second chamber (11a, 11b), which are hydraulically connected to each other and of which one is formed as a drive chamber (11a) and the other is formed as an output chamber (11b),
- wherein a first piston (13a) is arranged movably along a piston axis (A) in the first chamber (11a) such that this piston (13a) separates the first chamber (11a) into a variable-volume first working chamber (15a) and a first rear-side chamber (17a), wherein the first rear-side chamber (17a) is at least partially delimited by a first bellows element (19a) with variable axial length,
- wherein a second piston (13b) is arranged movably along a piston axis (A) in the second chamber (11b) such that this second piston (13b) separates the second chamber (11b) into a variable-volume second working chamber (15b) and a second rear-side chamber (17b), wherein the second rear chamber (17b) ist at least partially delimited by a second bellows element (19b) with variable axial length,
- and wherein the transmission unit (5) additionally has a reservoir chamber (41) for the hydraulic fluid (7), which is and/or can be fluidically coupled to the at least one rear-side chamber (17a);
**characterized in that**
the respective rear-side chamber (17a, 17b) is delimited by a respective lateral boundary wall which is subdivided into a respective straight cylindrical wall (23) and into the respective bellows element (19a, 19b).

2. The hydraulic transmission unit (5) according to claim 1, in which the reservoir chamber (41) for the hydraulic fluid (7) is fluidically coupled to both rear chambers (17a, 17b).

3. The hydraulic transmission unit (5) according to claim 1,
- in which the piston (13a) comprises a piston body (22) and a piston pin (21a),
- and in which the associated first rear-side chamber (17a) comprises an end plate (33) in its axial end region facing away from the piston body (22), through which the piston pin (21a) protrudes into the first rear-side chamber (17a) and to which the piston pin (21a) is fixedly connected.

4. The hydraulic transmission unit (5) according to any one of claims 1 or 2, in which the first chamber (11a) is configured such that upon a movement of the first piston (11 a) along the piston axis (A), a volume compensation is effected by the first bellows element (19a) for the volume of the first rear-side chamber (17a).

5. The hydraulic transmission unit (5) according to any one of the preceding claims, in which the first rear-side chamber (17a) is fluid-tightly encapsulated against the outer environment.

6. The hydraulic transmission unit (5) according to any one of the preceding claims, in which the first bellows element (19a) is formed as a corrugated bellows and/or as a diaphragm bellows.

7. The hydraulic transmission unit (5) according to any one of the preceding claims, in which
- wherein the associated first piston (13a) is arranged axially movably in relation to the cylinder wall (23),
- wherein a gap with a gap width (g) below 10 µm is formed between the cylinder wall (23) and the piston (13).

8. The hydraulic transmission unit (5) according to any one of the preceding claims, which is filled with a hydraulic fluid (7).

9. The hydraulic transmission unit (5) according to any one of the preceding claims, in which the reservoir chamber (41) can be applied with pressure.

10. The hydraulic transmission unit (5) according to any one of the preceding claims, which is formed as a pumpable transmission unit, such that a summed movement can be generated in the region of the output chamber (11b) by multiple consecutive single movements in the region of the drive chamber (11a).

11. The hydraulic transmission unit (5) according to any one of the preceding claims, which is formed to transfer a movement of a drive body (21 a) arranged in the region of the drive chamber (11 a) to an output body (21 b) arranged in the region of the output chamber (11 b) with a transmission ratio of 1:2 or less.

12. The hydraulic transmission unit (5) according to any of claims 1 to 10, which is formed to transfer a movement of a drive body (21a) arranged in the region of the drive chamber (11a) to an output body (21b) arranged in the region of the output chamber (11 b) with a transmission ratio of at least 2.

13. An actuator device (1) with an actuator (3) and a hydraulic transmission unit (5) according to any one of the preceding claims, mechanically connected in series with the actuator (3).

14. The actuator device (1) according to claim 13, which comprises two partial systems (71, 72), wherein each partial system (71, 72) comprises an actuator (3) and a hydraulic transmission unit (5) mechanically connected in series with the actuator (3), wherein the two transmission units (5) can be mechanically coupled to a common superordinated output element (75) in the region of their respective output chambers (11 b), such that a simultaneous control of the two actuators (3) results in a common movement of the superordinated output element (75) by means of the two hydraulic transmission units (5).

## Revendications

1. Unité de transmission hydraulique (5) pour un dispositif actionneur (1), qui peut être remplie d'un liquide hydraulique (7) befüllbar et présente une première et une deuxième chambre (11a, 11b) qui sont reliées hydrauliquement entre elles et dont l'une est réalisée sous forme de chambre d'entraînement (11a) et l'autre est réalisée sous forme de chambre de sortie (11b),
- dans laquelle dans la première chambre (11a), un premier piston (13a) est disposé de manière mobile le long d'un axe de piston (A) de sorte que ce premier piston (13a) sépare la première chambre (11a) en une première chambre de travail (15a) à volume variable et une première chambre de face arrière (17a), dans laquelle la première chambre de face arrière (17a) est délimitée au moins partiellement par un premier élément de soufflet (19a) à longueur axiale variable,
- dans laquelle dans la deuxième chambre (11b), un deuxième piston (13b) est disposé de manière mobile le long d'un axe de piston (A) de sorte que ce deuxième piston (13b) sépare la deuxième chambre (11b) en une deuxième chambre de travail (15b) à volume variable et une deuxième chambre de face arrière (17b), dans laquelle la deuxième chambre de face arrière (17b) est délimitée au moins partiellement par un deuxième élément de soufflet (19b) à longueur axiale variable,
- et dans laquelle l'unité de transmission (5) présente en plus une chambre de réserve (41) pour le liquide hydraulique (7), qui est couplée et/ou peut être couplée fluidiquement à ladite au moins une chambre de face arrière (17a) ;
**caractérisée en ce que** la chambre de face arrière (17a, 17b) respective est délimitée par une paroi de délimitation latérale respective qui est divisée en une paroi de cylindre (23) droite respective et l'élément de soufflet (19a, 19b) respectif.

2. Unité de transmission hydraulique (5) selon la revendication 1, dans laquelle la chambre de réserve (41) pour le liquide hydraulique (7) est couplée fluidiquement aux deux chambres de face arrière (17a, 17b).

3. Unité de transmission hydraulique (5) selon la revendication 1 ou 2,
- dans laquelle le premier piston (13a) présente un corps de piston (22) et un axe de piston (21a),
- et dans laquelle la première chambre de face arrière (17a) associée présente dans sa zone d'extrémité axiale détournée du corps de piston (22) une plaque d'extrémité (33) à travers laquelle l'axe de piston (21a) fait saillie dans la première chambre de face arrière (17a) et avec laquelle l'axe de piston (21a) est solidaire.

4. Unité de transmission hydraulique (5) selon l'une quelconque des revendications précédentes, dans laquelle la première chambre (11a) est configurée de telle sorte qu'une compensation de volume par le premier élément de soufflet (19a) a lieu en cas de mouvement du premier piston (13a) le long de l'axe de piston (A) pour le volume de la première chambre de face arrière (17a).

5. Unité de transmission hydraulique (5) selon l'une quelconque des revendications précédentes, dans laquelle la première chambre de face arrière (17a) est encapsulée de manière étanche au fluide par rapport à l'environnement extérieur.

6. Unité de transmission hydraulique (5) selon l'une quelconque des revendications précédentes, dans laquelle l'élément de soufflet (19a) est configuré sous forme de soufflet à plis et/ou de soufflet à membrane.

7. Unité de transmission hydraulique (5) selon l'une quelconque des revendications précédentes, dans laquelle
- le premier piston (13a) associé est disposé de manière axialement mobile par rapport à la paroi de cylindre (23),
- dans laquelle un interstice d'une largeur d'interstice (g) inférieure à 10 µm est réalisé entre la paroi de cylindre (23) et le premier piston (13).

8. Unité de transmission hydraulique (5) selon l'une quelconque des revendications précédentes, qui est remplie d'un liquide hydraulique (7).

9. Unité de transmission hydraulique (5) selon l'une quelconque des revendications précédentes, dans laquelle la chambre de réserve (41) peut être mise sous pression.

10. Unité de transmission hydraulique (5) selon l'une quelconque des revendications précédentes, qui est réalisée sous forme d'unité de transmission pompable de sorte que plusieurs mouvements individuels successifs dans la zone de la chambre d'entraînement (11a) peuvent générer un mouvement cumulé dans la zone de la chambre de sortie (11b).

11. Unité de transmission hydraulique (5) selon l'une quelconque des revendications précédentes, qui est réalisée pour transmettre un mouvement d'un corps d'entraînement (21a) disposé au niveau de la chambre d'entraînement (11a) et ayant un rapport de transmission de 1:2 ou moins à un corps de sortie (21b) disposé au niveau de la chambre de sortie (11b).

12. Unité de transmission hydraulique (5) selon l'une quelconque des revendications 1 à 10, qui est réalisée pour transmettre un mouvement d'un corps d'entraînement (21a) disposé au niveau de la chambre d'entraînement (11a) et ayant un rapport de transmission d'au moins 2 à un corps de sortie (21b) disposé au niveau de la chambre de sortie (11b).

13. Dispositif actionneur (1), comprenant un actionneur (3) et une unité de transmission hydraulique (5) selon l'une quelconque des revendications précédentes connectée mécaniquement en série avec l'actionneur (3).

14. Dispositif actionneur (1) selon la revendication 13, qui présente deux systèmes partiels (71, 72), dans lequel chaque système partiel (71, 72) présente un actionneur et une unité de transmission hydraulique (5) connectée mécaniquement en série avec l'actionneur (3), dans lequel les deux unités de transmission (5) peuvent être couplées mécaniquement au niveau de leurs chambres de sortie (11b) respectives à un élément de sortie (75) commun supérieur de sorte qu'un pilotage simultané des deux actionneurs (3) conduit à un mouvement commun de l'élément de sortie (75) supérieur au moyen des deux unités de transmission hydrauliques (5).
